# EUROPEAN PATENT SPECIFICATION

(11) **EP 3 241 955 B1**
(45) Date of publication and mention of the grant of the patent: **13.11.2019**
(21) Application number: 17168696.7
(22) Date of filing: 28.04.2017
(51) Int. Cl.: E04C 2/292, E04C 2/296

(54) **WALL STRUCTURE**
WANDSTRUKTUR
STRUCTURE DE PAROI

(30) Priority: 04.05.2016 FI 20165382
(43) Date of publication of application: 08.11.2017
(73) Proprietor: Paroc Panel System Oy Ab, 00180 Helsinki (FI)
(72) Inventor: RANTALA, Kimmo, 21600 Parainen (FI)
(74) Representative: Tomkins & Co

(56) References cited:
- EP-A1- 3 130 721
- US-A- 5 381 638
- US-A- 5 921 046

## Description

The present invention relates to a wall structure having a frame structure and, attached thereto, several sandwich panels forming the outer surface of the building, the sandwich panels including a core part of thermal insulation material and surface panels tightly covering it on both sides, the surface panels having a longitudinal and lateral dimension and the surface panels having a tongue on at least one longitudinal edge and a groove on the opposite longitudinal edge, the panels being installed onto the wall structure such that the panels to be placed adjacent to each other are each at a distance from another, wherein between them is formed from a separate seam element a vertical seam extending the height of one or more panels placed one on top of the other.

The use of sandwich panels in construction has long been known and their use is quite widespread. Prior art wall structures are known from EP 3 130 721 A1 (intermediate document) and US 5,381,638 A. One problem with using ordinary sandwich panels provided with tight surface panels is the removal of moisture from inside the wall structure. The vertical seam between the adjacent panels in the wall structure is normally sealed such that moisture is not able to enter inside the seam and thus damage the thermal insulation material within the seam.

The object of the present invention is to provide a solution utilizing a separate seam to remove moisture.

To achieve this object, a wall structure according to the invention is characterized in that the sandwich panels are installed vertically and the vertical seam is formed as a separate seam element having a core part of thermal insulation material and surface panels covering it on both sides, the surface panels having tongue and groove edges that are compatible with the tongue and groove edges of the sandwich panels, into the inner surface panel of which seam element is formed one or more openings, via which the internal moisture is able to move into the ventilation channel arranged in connection with the seam element. An alternative embodiment of the invention is, in turn, characterized in that the sandwich panels are installed in a horizontal position, wherein the horizontal seam between the adjacent panels is formed as a separate seam element having a core part of thermal insulation material and surface panels covering it on both sides, into the inner surface panel of which seam element is formed one or more openings, via which the moisture within the structure is able to move into the horizontal ventilation channel arranged in the seam element and further into a vertical ventilation channel arranged in connection with the vertical seam.

The vertical seam is formed by means of a separate seam element, into which seam element is preferably prefabricated a ventilation channel. The ventilation channel can also be formed as a groove into at least one sandwich panel adjacent to the vertical seam, the groove opening towards the seam.

A solution according to the invention is particularly suitable for renovation construction, in which the weight-bearing wall of the building serves as the frame structure, but it can also be used in new construction.

In the following, the invention is described in more detail by referring to the accompanying drawings, in which:
- Fig. 1: shows a diagrammatic principle illustration as viewed from the front of a portion of the outer surface of the wall structure, which has seam elements disposed in the vertical seams between sandwich panels installed vertically,
- Fig. 2: shows a cross-sectional view of two sandwich panels and the seam element between them,
- Fig. 3: shows a diagrammatic principle illustration as viewed from the front of a portion of the outer surface of the wall structure, which has seam elements disposed in the horizontal seams between sandwich panels installed horizontally, the vertical seams being sealed with thermal insulation material,
- Fig. 4: shows a cross-sectional view of a seam element according to the invention, into which is formed a ventilation channel, and
- Fig. 5: shows one embodiment of a vertical ventilation channel.

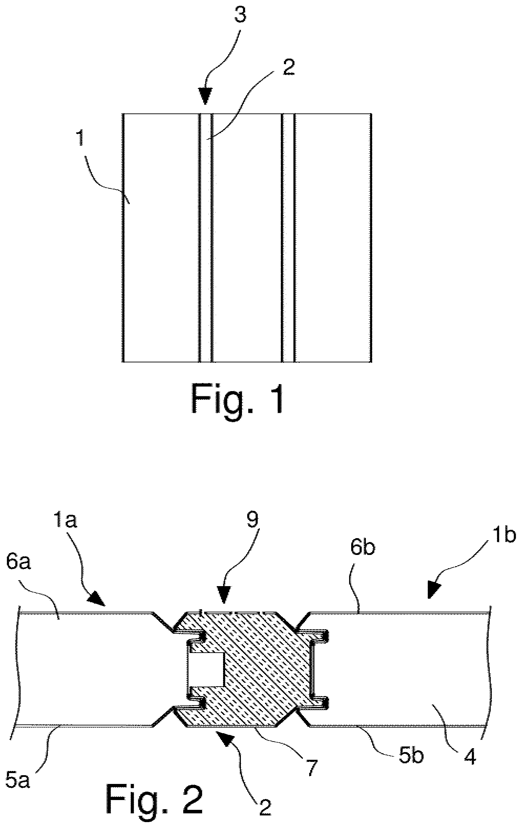

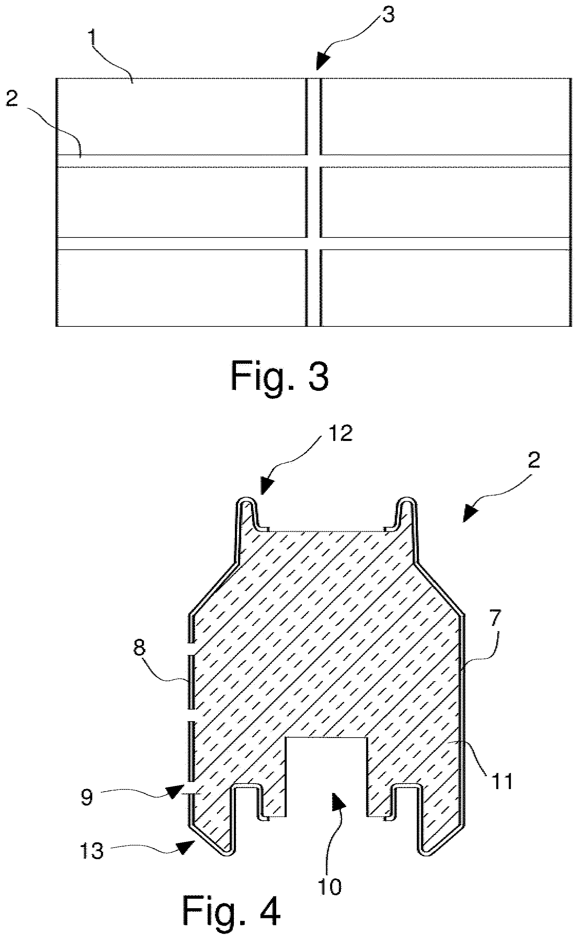

Fig. 1 shows diagrammatically three sandwich panels 1 installed vertically and adjacent at a distance from each other, wherein between them is formed a vertical seam 3. The seam is, in this example, formed by means of a separate seam element 2 shown in more detail in Fig. 4. The height of the sandwich panels is typically 3-12 m and the width 1.2 m. Vertically, there may be one or more elements installed one on top of the other. For example, if the building is 20 m high, there may be 2 units of elements 10 metres high. In this case, ventilation preferably occurs from the upper and lower edges of each element, i.e. ventilation occurs also in the horizontal seam between the elements.

Fig. 2 shows a cross-section of two adjacent sandwich panels 1a, 1b and the seam element 2 between them. The seam element 2 is connected to the adjacent sandwich panels by a tongue and groove connection, which, in the example of Fig. 2, forms V-shaped, clearly distinguished seam grooves. The seam grooves can also be formed as linear or as a groove in some other shape. The sandwich panels 1a, 1b include a core part 4 of thermal insulation material and surface panels 5a, 6a and 5b, 6b tightly covering it on both sides. The thermal insulation material can be, for example, mineral wool, such as stone wool or glass wool, polyurethane, polystyrene or other suitable thermal insulation material. The insulation can also be a vacuum. The surface panel is preferably a plastic-coated sheet steel. The seam element 2 includes a core part 11 of thermal insulation material and surface panels 7, 8 covering it on both sides. The outer surface panel 7 is tight. The inner surface panel 8 is provided with openings 9, via which moisture is able to move through the thermal insulation material 11 into the ventilation channel 10 shown in Fig. 4. The openings 9 are preferably formed into the surface panel as rectangular openings extending in its longitudinal or lateral direction, but they can also be circular, or openings of some other shape. The inner and outer surface panel 7, 8 are provided with a tongue 12 on one longitudinal edge and a groove 13 on the opposite longitudinal edge. The adjacent sandwich panels of the seam element 2 are provided with corresponding compatible tongue and groove edges for connecting the seam element to the sandwich panels. The thermal insulation material 11 of the seam element can be, for example, mineral wool, such as stone wool or glass wool, or other material, which allows moisture to travel into the ventilation channel 10. The ventilation channel 10 is shown in Fig. 4 as disposed as a groove made at one side of the core part 11 of the seam element, the groove opening towards the adjacent sandwich panel. As shown in the figures, the cross-section of the ventilation channel can be rectangular in shape, or its cross-section can be, for example, in the shape of a square, semi-circle, or the shape of the letters V or U. The ventilation channel can also be formed into some other site in the seam element and there may be more than one of them. The ventilation channel can also be formed as a groove made at the core part 4 of the adjacent sandwich panel 1a, 1b of the seam element, the groove opening towards the seam element 2. The panels may have ventilation channels also along the portion of the element between the seams, which ventilation channels can be open or can contain mineral wool or other material, which allows possible moisture to travel out from the element. There are one or more openings 9 in the inner surface panel 8 of the seam element. The ventilation channel 10 may be disposed inside the thermal insulation material, opening from its upper and lower ends into the open air. At its upper end, the ventilation channel is preferably arranged to open below the protection plate, which prevents rain water from entering the ventilation channel.

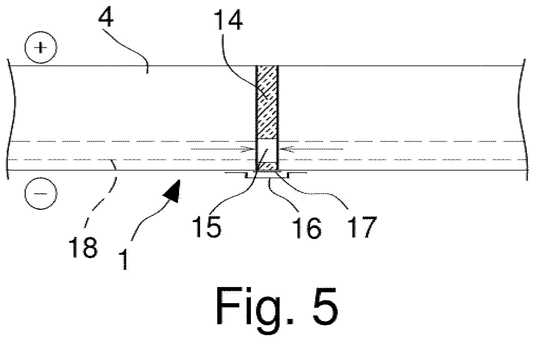

Fig. 3 shows diagrammatically six sandwich panels 1 installed horizontally. The length of the panels is typically 3-12 m and the width 1.2 m. The longitudinal edges of the sandwich panels are provided with tongue and groove edges and, in the shown embodiment, between these is installed a horizontal seam element 2, which can be a seam element provided with a ventilation channel according to Fig. 4. The vertical seam 3 is preferably sealed with thermal insulation material, which allows the moisture within the structure to move into the ventilation channel arranged in the seam. In this case, the ventilation channel is preferably formed as a groove formed into at least one of the sandwich panels installed adjacently, wherein at the corresponding end on the side of the vertical seam 3 of the horizontal seam element 2 is formed a corresponding groove such that the ventilation channel is formed as continuous over several sandwich panels installed one on top of the other and the seam elements 2 between them, opening from its lower and upper ends into the open air. The thermal insulation material sealing the seam 3 is sealed on its outer surface, for example, by means of a separate sealing strip, against external moisture. The ventilation channel can also be formed as a channel formed inside the sealing thermal insulation material. Fig. 5 shows such an embodiment example. In Fig. 5, the vertical ventilation channel 15 of the seam between the sandwich panels is formed as a channel inside the sealing wool 14. The sealing ribbon providing the moisture protection of the vertical seam is marked by reference numeral 17 and the cover strip of the seam by reference numeral 16. Marked by reference numeral 18 and shown in the figures as dashed lines are the horizontal ventilation channels of the horizontal seam, which open into the vertical channel 15.

A separate seam element in the vertical seam 3 can also be used in a horizontal installation of sandwich panels, as in claim 5, wherein the ordinarily straight end edges on the seam side of the sandwich element are provided with a tongue and groove edge, which enables the use of a seam element provided with a tongue and groove edge in the vertical seam. In embodiments not falling under the scope of the present invention, the seam element can also be made without a tongue and groove edge and can be provided with other attachment means for attaching to the adjacent sandwich panel. The edges on the sandwich panel side of the seam element can, for example, be somewhat indented such that they can settle below the corresponding straight end edge of the inner and outer surface panels of the sandwich panels.

It is obvious to the skilled person in the art that the various embodiments of the invention are also not limited to only the examples presented above, rather many variations are possible within the scope of the claims presented below.

The various details of embodiments can be implemented in various manners and they can also be combined.

## Claims

1. A wall structure having a frame structure and, attached thereto, a plurality of sandwich panels (1, 1a, 1b) forming the outer surface of a building, the sandwich panels including a core part (4) of thermal insulation material and surface panels (5a, 6a; 5b, 6b) tightly covering it on both sides, the surface panels having a tongue on at least one longitudinal edge and a groove on an opposite longitudinal edge; **characterized in that** the wall structure further comprises a separate vertical seam element (2) arranged between vertically adjacent sandwich panels, the seam element (2) comprising a core part (11) of thermal insulation material, an outer surface panel (7) and an inner surface panel (8) covering the core part on opposing sides, the inner and outer surface panels having tongue and groove edges (12, 13) that are compatible with the tongue and groove edges of the sandwich panels and wherein the inner surface panel (8) of the seam element comprises an opening (9) for ventilating moisture within the wall structure to the outer surface of the building via a ventilation channel (10) provided within the wall structure.

2. A wall structure according to claim 1, wherein the ventilation channel (10) is formed into the seam element (2).

3. A wall structure according to claim 1, wherein the ventilation channel (10) is formed as a groove formed into at least one sandwich panel adjacent to the seam element (2), the groove opening towards the seam element.

4. The wall structure according to any previous claim, wherein the thermal insulation material of the seam element (2) comprises mineral wool.

5. A wall structure having a frame structure and, attached thereto, a plurality of sandwich panels (1, 1a, 1b) forming the outer surface of a building, the sandwich panels including a core part (4) of thermal insulation material and surface panels (5a, 6a; 5b, 6b) tightly covering it on both sides, the surface panels having a tongue on at least one longitudinal edge and a groove on an opposite longitudinal edge; **characterized in that** the wall structure further comprises an separate horizontal seam element (2) arranged between horizontally adjacent sandwich panels, the seam element (2) comprising a core part (11) of thermal insulation material, an outer surface panel (7) and an inner surface panel (8) covering the core part on opposing sides, the inner and outer surface panels having tongue and groove edges (12, 13) that are compatible with the tongue and groove edges of the sandwich panels, the horizontal seam element further comprising a horizontal ventilation channel (18) and wherein the inner surface panel (8) of the seam element comprises an opening (9) for ventilating moisture within the wall structure to the outer surface of the building via the horizontal ventilation channel and a vertical ventilation channel (15) associated with a vertical seam (3) provided between vertically adjacent panels.

6. A wall structure according to claim 5, **characterized in that** the vertical seam (3) comprises a separate seam element (2) and the vertical ventilation channel is formed into the seam element (2).

7. A wall structure according to claim 5, **characterized in that** the horizontal ventilation channel is formed as a groove formed into at least one sandwich panel adjacent to the vertical seam, the groove opening towards the seam.

8. A wall structure according to claim 5, **characterized in that** the vertical seam (3) is sealed with thermal insulation material, and that the sealing material is mineral wool.

9. A wall structure according to any one of claims 5 to 8, **characterized in that** said at least one opening (9) is formed into the inner surface panel (8) in its longitudinal or lateral direction.

## Patentansprüche

1. Wandkonstruktion mit einer Rahmenstruktur und daran befestigt einer Vielzahl von Sandwichpaneelen (1, 1a, 1b), die die Außenfläche eines Gebäudes bilden, wobei die Sandwichpaneele ein Kernteil (4) aus Wärmedämmmaterial und Oberflächenpaneele (5a, 6a; 5b, 6b) aufweisen, die das Wärmedämmmaterial auf beiden Seiten engpassend abdecken, wobei die Oberflächenpaneele eine Feder an wenigstens einer Längskante und eine Nut an einer entgegengesetzten Längskante aufweisen;
**dadurch gekennzeichnet, dass** die Wandstruktur ferner ein separates vertikales Nahtelement (2) aufweist, das zwischen vertikal benachbarten Sandwichpaneelen angeordnet ist, wobei das Nahtelement (2) ein Kernteil (11) aus Wärmedämmmaterial, ein äußere Oberflächenpaneele (7) und eine innere Oberflächenpaneele (8) aufweist, die den Kernteil an entgegengesetzten Seiten abdeckt, wobei die inneren und äußeren Oberflächenpaneele Nut- und Federkanten (12, 13) aufweisen, die mit den Nut- und Federkanten der Sandwichpaneele kompatibel sind, und wobei das innere Oberflächenpaneel (8) des Saumelements eine Öffnung (9) zum Ventilieren von Feuchtigkeit innerhalb der Wandstruktur zur Außenfläche des Gebäudes über einen innerhalb der Wandstruktur vorgesehenen Ventilationskanal (10) aufweist.

2. Wandstruktur nach Anspruch 1, wobei der Ventilationskanal (10) in dem Saumelement (2) ausgebildet ist.

3. Wandkonstruktion nach Anspruch 1, wobei der Ventilationskanal (10) als Nut ausgebildet ist, die in wenigstens einem Sandwichpaneel angrenzend an das Saumelement (2) ausgebildet ist, wobei sich die Nut zum Saumelement hin öffnet.

4. Wandkonstruktion nach einem beliebigen früheren Anspruch, wobei das Wärmedämmmaterial des Nahtelements (2) Mineralwolle aufweist.

5. Wandkonstruktion mit einer Rahmenstruktur und daran befestigt einer Vielzahl von Sandwichpaneelen (1, 1a, 1b), die die Außenfläche eines Gebäudes bilden, wobei die Sandwichpaneele ein Kernteil (4) aus Wärmedämmmaterial und Oberflächenpaneele (5a, 6a; 5b, 6b) aufweisen, die das Wärmedämmmaterial auf beiden Seiten engpassend abdecken, wobei die Oberflächenpaneele eine Feder an wenigstens einer Längskante und eine Nut an einer entgegengesetzten Längskante aufweisen;
**dadurch gekennzeichnet, dass** die Wandstruktur ferner ein separates horizontales Nahtelement (2) aufweist, das zwischen horizontal benachbarten Sandwichpaneelen angeordnet ist, wobei das Nahtelement (2) ein Kernteil (11) aus Wärmedämmmaterial, eine äußere Oberflächenpaneele (7) und eine innere Oberflächenpaneele (8), die das Kernteil an entgegengesetzten Seiten abdecken, aufweist, wobei die inneren und äußeren Oberflächenpaneele Nut- und Federkanten (12, 13) aufweisen, die mit den Nut- und Federkanten der Sandwichpaneele kompatibel sind, wobei das horizontale Nahtelement ferner einen horizontalen Ventilationskanal (18) aufweist und wobei das innere Oberflächenpaneel (8) des Nahtelements eine Öffnung (9) aufweist, zum Ventilieren von Feuchtigkeit innerhalb der Wandstruktur zur Außenfläche des Gebäudes über den horizontalen Ventilationskanal und einen vertikalen Ventilationskanal (15), der einer vertikalen Naht (3) zugeordnet ist, die zwischen vertikal benachbarten Paneelen vorgesehen ist.

6. Wandkonstruktion nach Anspruch 5, **dadurch gekennzeichnet, dass** die vertikale Naht (3) ein separates Nahtelement (2) aufweist und der vertikale Ventilationskanal in dem Nahtelement (2) ausgebildet ist.

7. Wandkonstruktion nach Anspruch 5, **dadurch gekennzeichnet, dass** der horizontale Ventilationskanal als Nut ausgebildet ist, die in wenigstens einer Sandwichpaneele angrenzend an die vertikale Naht ausgebildet ist, wobei sich die Nut zur Naht hin öffnet.

8. Wandkonstruktion nach Anspruch 5, **dadurch gekennzeichnet, dass** die vertikale Naht (3) mit Wärmedämmmaterial gedämmt ist und dass das Dämmmaterial Mineralwolle ist.

9. Wandkonstruktion nach einem der Ansprüche 5 bis 8, **dadurch gekennzeichnet, dass** die wenigstens eine Öffnung (9) in der inneren Oberflächenpaneele (8) in seiner Längs- oder Querrichtung ausgebildet ist.

## Revendications

1. Structure de paroi ayant une structure de châssis et, fixée à celle-ci, une pluralité de panneaux sandwich (1, 1a, 1b) formant la surface extérieure d'un bâtiment, les panneaux sandwich comprenant une partie formant noyau (4) en matériau d'isolation thermique et une surface des panneaux (5a, 6a ; 5b, 6b) la recouvrant étroitement des deux côtés, les panneaux de surface comportant une languette sur au moins un bord longitudinal et une rainure sur un bord longitudinal opposé ;
**caractérisée en ce que** la structure de paroi comprend en outre un élément de joint vertical distinct (2) disposé entre des panneaux sandwich adjacents verticalement, l'élément de joint (2) comprenant une partie formant noyau (11) en matériau d'isolation thermique, un panneau de surface extérieur (7) et un panneau de surface interne (8) recouvrant la partie formant noyau sur des côtés opposés, les panneaux de surface interne et externe ayant des bords comportant une languette et une rainure (12, 13) compatibles avec les bords comportant une languette et une rainure des panneaux sandwich et dans lequel le panneau de surface interne (8) de l'élément de joint comprend une ouverture (9) pour ventiler l'humidité dans la structure de mur jusqu'à la surface extérieure du bâtiment via un canal de ventilation (10) prévu dans la structure de mur.

2. Structure de paroi selon la revendication 1, dans laquelle le canal de ventilation (10) est formé au sein de l'élément de joint (2).

3. Structure de paroi selon la revendication 1, dans laquelle le canal de ventilation (10) est formé comme une gorge formée dans au moins un panneau sandwich adjacent à l'élément de joint (2), la gorge s'ouvrant vers l'élément de joint.

4. Structure de paroi selon l'une quelconque des revendications précédentes, dans laquelle le matériau d'isolation thermique de l'élément de joint (2) comprend de la laine minérale.

5. Structure de paroi ayant une structure de châssis et, fixée à celle-ci, une pluralité de panneaux sandwich (1, 1a, 1b) formant la surface extérieure d'un bâtiment, les panneaux sandwich comprenant une partie formant noyau (4) en matériau d'isolation thermique et des panneaux de surface (5a, 6a; 5b, 6b) le couvrant étroitement des deux côtés, les panneaux de surface comportant une languette sur au moins un bord longitudinal et une rainure sur un bord longitudinal opposé;
**caractérisée en ce que** la structure de paroi comprend en outre un élément de joint horizontal distinct (2) disposé entre des panneaux sandwich adjacents horizontalement, l'élément de joint (2) comprenant une partie formant noyau (11) en matériau d'isolation thermique, un panneau de surface externe (7) et un panneau de surface interne (8) recouvrant la partie formant noyau sur des côtés opposés, les panneaux de surface interne et externe ayant des bords comportant une languette et une rainure (12, 13) compatibles avec les bords comportant une languette et une rainure des panneaux sandwich, l'élément de joint horizontal comprenant en outre un canal de ventilation horizontal (18) et dans lequel le panneau de surface interne (8) de l'élément de joint comprend une ouverture (9) pour ventiler l'humidité dans la structure de mur jusqu'à la surface externe du bâtiment via le canal de ventilation horizontal et un canal de ventilation vertical (15) associé à un joint vertical (3) prévu entre des panneaux adjacents verticalement.

6. Structure de paroi selon la revendication 5, **caractérisée en ce que** le joint vertical (3) comprend un élément de joint distinct (2) et le canal de ventilation vertical est formé dans l'élément de joint (2).

7. Structure de paroi selon la revendication 5, **caractérisée en ce que** le canal de ventilation horizontal est formé comme une gorge formée dans au moins un panneau sandwich adjacent au joint vertical, la gorge s'ouvrant vers le joint.

8. Structure de paroi selon la revendication 5, **caractérisée en ce que** le joint vertical (3) est scellé avec un matériau d'isolation thermique et **en ce que** le matériau d'étanchéité est de la laine minérale.

9. Structure de paroi selon l'une quelconque des revendications 5 à 8, **caractérisée en ce que** ladite au moins une ouverture (9) est formée dans le panneau de surface interne (8) dans sa direction longitudinale ou latérale.
